# EUROPEAN PATENT APPLICATION

(11) **EP 4 400 954 A1**
(43) Date of publication of application: **17.07.2024**
(21) Application number: 23220268.9
(22) Date of filing: 27.12.2023
(51) Int. Cl.: G06F 3/0481, A63F 13/5255, A63F 13/5258, G06F 3/04815, G06F 3/0484, G06F 3/04847, H04N 13/117, H04N 23/90

(54) **IMAGE PROCESSING APPARATUS, IMAGE PROCESSING METHOD, AND PROGRAM**

(30) Priority: 11.01.2023 JP 2023002560
(71) Applicant: CANON KABUSHIKI KAISHA, Tokyo 146-8501 (JP)
(72) Inventor: OGASAWARA, Taku, Tokyo 146-8501 (JP)
(74) Representative: TBK

(57) **Abstract**

An image processing apparatus obtains an input of additional information to a two-dimensional virtual viewpoint image that is based on a three-dimensional virtual space and a virtual viewpoint in the virtual space, sets a plane of interest on which the additional information is to be located in the virtual space, in a range according to the virtual viewpoint in the virtual space, converts the additional information to an object to be located at a three-dimensional position in the virtual space by projecting the input additional information to the plane of interest, and causes a display to display the virtual viewpoint image that is based on the virtual space in which the object is located at the three-dimensional position.

## Description

### BACKGROUND OF THE INVENTION

### Field of the Invention

The present disclosure relates to a technique for sophisticating operations of virtual viewpoint images.

### Description of the Related Art

A function is known in which, in an application of executing presentation, an input of a marker having a circular or linear shape for indicating a point of interest in an image or the like is accepted while displaying the image, and a page image and the marker are combined and output. A technique in which such a function is applied to a remote conference system is described in Japanese Patent Laid-Open No. 2017-151491.

In recent years, a technique attracts attention that is for generating, from a plurality of images obtained by capturing performed using a plurality of image capturing devices, an image (virtual viewpoint image) that shows a captured scene viewed from any viewpoint. It is envisioned, in such a virtual viewpoint image as well, a marker is added to an object to be focused on in a scene, for example. When a marker is input to a virtual viewpoint image, the marker is displayed at an appropriate position when viewed from the viewpoint at the time of the marker having been input, but the marker may be displayed at an unintended position when the viewpoint is switched to another viewpoint or the like. As described above, it is possible that, when rendering additional information such as a marker to a virtual viewpoint image, the additional information to be rendered may be displayed at an unintended position. Also, it is envisioned that, when inputting additional information such as a marker to an image obtained by mapping a three-dimensional space to a two dimensional space, it is not easy to input the additional information to an appropriate three-dimensional position.

### SUMMARY OF THE INVENTION

The present disclosure provides a control technique regarding inputting and outputting additional information to virtual viewpoint images.

The present invention in its first aspect provides an image processing apparatus as specified in claims 1 to 13.

The present invention in its second aspect provides an image processing method as specified in claim 14.

The present invention in its third aspect provides a program as specified in claim 15.

Further features of the present invention will become apparent from the following description of exemplary embodiments with reference to the attached drawings.

### BRIEF DESCRIPTION OF THE DRAWINGS

FIGS. 1A and 1B are diagrams illustrating an exemplary configuration of an image processing system.
FIGS. 2A and 2B are diagrams illustrating an exemplary configuration of an image processing apparatus.
FIGS. 3A to 3F are diagrams for describing a position and an orientation and an operation method of a virtual viewpoint.
FIGS. 4A to 4G are diagrams for describing a virtual viewpoint, a plane of interest, and a marker object.
FIGS. 5A to 5C are diagrams for describing a method of operating a distance of a plane of interest from a virtual viewpoint.
FIGS. 6A to 6H are diagrams for describing a method of setting and operating a plurality of planes of interest.
FIGS. 7A to 7B are diagrams illustrating an example of a processing flow to be executed by the image processing apparatus.
FIGS. 8A to 8F are diagrams for describing marker control processing.
FIGS. 9A to 9E are diagrams for describing marker control processing.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### [first Embodiment]

### (System Configuration)

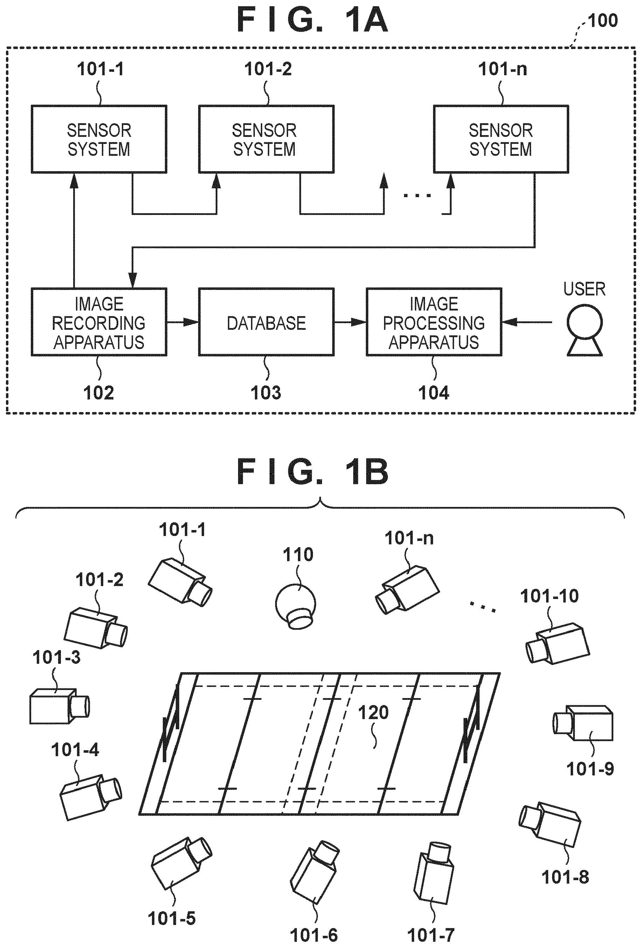

An exemplary configuration of an image processing system 100 according to the present embodiment will be described using FIGS. 1A and 1B. The image processing system 100 includes a plurality of sensor systems (n sensor systems 101-1 to 101-n, in the example in FIG 1A). Each sensor system includes at least one image capturing device (e.g., camera). Note that if there is no need to distinguish the sensor systems, the sensor systems 101-1 to 101-n are collectively referred to as "sensor systems 101" below. In this image processing system 100, virtual viewpoint image data is generated based on image data obtained by the plurality of sensor systems 101, and the virtual viewpoint image data is provided to a user.

An exemplary installation of the sensor systems 101 is shown in FIG 1B. The plurality of sensor systems 101 are installed so as to surround an area (hereinafter, referred to as a "photographic subject area 120"), which is a photographic subject of photographing, and shoot the photographic subject area 120 from respectively different directions. For example, when the photographic subject area 120 is defined as a field of a stadium in which soccer or rugby football games are performed, n (e.g., many such as 100) sensor systems 101 are installed so as to surround the field. Note that the number of sensor systems 101 to be installed is not specifically limited, but is at least two or more. Note that the sensor systems 101 need not to be installed over the entire perimeter of the photographic subject area 120, and may be installed in a portion of the perimeter of the photographic subject area 120 due to a restriction of installation place, for example. Also, image capturing devices having different functions such as a telephoto camera and a wide angle camera may be included in image capturing devices respectively included in the plurality of sensor systems 101.

Also, the sensor systems 101 may each include a sound capturing device (microphone) in addition to an image capturing device (camera). The sound capturing devices in the respective plurality of sensor systems 101 capture sound in a synchronized manner. The image processing system 100 generates, based on sound data obtained by capturing performed by each of the plurality of sound capturing device, data of virtual listening point sound to be reproduced along with a virtual viewpoint image, and provides the data to a user. Note that description regarding sound will be omitted below in order to simplify the description, but it is assumed that an image and sound are processed together.

Note that the photographic subject area 120 is not limited to the field of a stadium, and may also be defined so as to include spectator seats of the stadium, for example. Also, the photographic subject area 120 may also be defined so as to be an indoor studio, stage, or the like. That is, the area of a photographic subject regarding which a virtual viewpoint image is to be generated may be defined as the photographic subject area 120. Note that the "photographic subject" here may be the area defined by the photographic subject area 120 itself, or may include, in addition thereto or instead thereof, all of objects such as persons such as a player and an umpire and balls that are present in the area. Also, through the present embodiment, the virtual viewpoint image is assumed to be a moving image, but may also be a still image.

The plurality of sensor systems 101 located as shown in FIG 1B performs image capturing of the same photographic subject area 120 using the image capturing devices included in the respective sensor systems 101 in a synchronized manner. In the present embodiment, images included in a plurality of image groups obtained by capturing the same photographic subject area 120 from a plurality of viewpoints in a synchronized manner are referred to as "multi-viewpoint images". Note that the multi-viewpoint image in the present embodiment may be a captured image itself, but may also be an image obtained by performing image processing such as processing for extracting a predetermined area on a captured image, for example.

Also, the image processing system 100 further includes an image recoding apparatus 102, a database 103, and an image processing apparatus 104. The image recoding apparatus 102 collects multi-viewpoint images obtained by capturing performed by the plurality of sensor systems 101 respectively, and stores the multi-viewpoint images in the database 103 in combination with respective timecodes used for the capturing. Here, the timecode is information for uniquely identify the time at which capturing is performed. For example, the timecode may be information for designating the image capturing time in a format such as day:hour:minute:second.frame number.

The image processing apparatus 104 obtains a plurality of multi-viewpoint images corresponding to the same timecode from the database 103, and generates a three-dimensional model of the photographic subject from the obtained multi-viewpoint images. The three-dimensional model is constituted by shape information such as a point group representing the shape of a photographic subject and faces and vertices at the time of representing the shape of the photographic subject by a set of polygons, and texture information representing color and texture at the surface of the shape, for example. Note that this is merely an example, and the three-dimensional model may be defined in any format for three-dimensionally representing a photographic subject. The image processing apparatus 104 generates, based on a virtual viewpoint designated by a user, for example, a virtual viewpoint image corresponding to the virtual viewpoint using a three-dimensional model of the photographic subject, and outputs the virtual viewpoint image. For example, as shown in FIG 1B, the virtual viewpoint 110 is designated by a position of the viewpoint in a virtual space associated with the photographic subject area 120 and a line of sight direction. The user can view a photographic subject generated based on a three-dimensional model of the photographic subject that is present in a virtual space from a viewpoint that is different from any of the image capturing devices of the plurality of sensor systems 101, for example, by changing the direction of the line of sight by moving the virtual viewpoint in the virtual space. Note that the virtual viewpoint can be freely moved in the three-dimensional virtual space, and therefore the virtual viewpoint image is also referred to as a "free viewpoint image".

The image processing apparatus 104 generates a virtual viewpoint image as an image showing a scene observed from the virtual viewpoint 110. Note that the image generated here is a two-dimensional image. The image processing apparatus 104 is a computer used by the user, for example, and may be configured by including a display device such as a touch panel display or a liquid crystal display. Also, the image processing apparatus 104 may have a display control function for causing an external display apparatus to display images. The image processing apparatus 104 causes such a display apparatus to display a virtual viewpoint image on its screen, for example. That is, the image processing apparatus 104 generates an image of a scene in a range that can be seen from the virtual viewpoint as a virtual viewpoint image, and executes processing for displaying the virtual viewpoint image on a screen.

Note that the image processing system 100 may include a constituent element different from those shown in the configuration in FIG 1A. For example, a configuration may also be adopted in which the image processing system 100 includes an operation/display device such as a touch panel display, separately from the image processing apparatus 104. For example, a configuration may be adopted in which an operation for designating a virtual viewpoint or the like is performed in a tablet or the like that includes a touch panel display, a virtual viewpoint image is generated in the image processing apparatus 104 in accordance with the operation, and the generated image is displayed in the tablet. Note that a configuration may also be adopted in which a plurality of tablets are connected to the image processing apparatus 104 via a server, and the image processing apparatus 104 outputs a virtual viewpoint image to each of the plurality of tablets. Also, the database 103 and the image processing apparatus 104 may be integrally configured. Also, a configuration may also be used in which processing until generating a three-dimensional model of a photographic subject from multi-viewpoint images is performed in the image recoding apparatus 102, and the three-dimensional model of the photographic subject is stored in the database 103. In this case, the image processing apparatus 104 reads out the three-dimensional model from the database 103, and generates a virtual viewpoint image. Also, an example in shown in FIG 1A in which the plurality of sensor systems 101 are connected in a daisy chain manner, but the sensor systems 101 may each be directly connected to the image recoding apparatus 102, for example, or connected in another connection form. Note that a configuration may also be adopted in which the image recoding apparatus 102 or another time synchronizing device notifies the sensor systems 101 of reference time information such that the sensor systems 101 can perform image capturing in a synchronized manner, for example.

In the present embodiment, the image processing apparatus 104 further accepts an input of a marker such as a circle or a line made by the user on a virtual viewpoint image displayed on a screen, superimposes the marker on the virtual viewpoint image, and displays the resultant image on the screen. When such a marker is input, the marker is appropriately displayed for the virtual viewpoint at the time of marker input, but when the position and orientation of the virtual viewpoint is changed or the like, unintended display may be performed such as the marker being shifted from the object to which the marker has been input. Therefore, in the present embodiment, the image processing apparatus 104 executes processing such that the marker accepted on the displayed two-dimensional screen is displayed at an appropriate position regardless of the movement of the virtual viewpoint. The image processing apparatus 104 converts a two-dimensional marker to a three-dimensional marker object using at least one plane. The plane to be used for conversion may be referred to as a "plane of interest" below. Also, the image processing apparatus 104 combines the photographic subject represented by a three-dimensional model and the three-dimensional marker object, and generates a virtual viewpoint image in which the position of the marker is appropriately adjusted in accordance with the movement of the virtual viewpoint. The configuration of the image processing apparatus 104 that executes such processing and an example of the processing flow will be described below.

### (Configuration of Image Processing Apparatus)

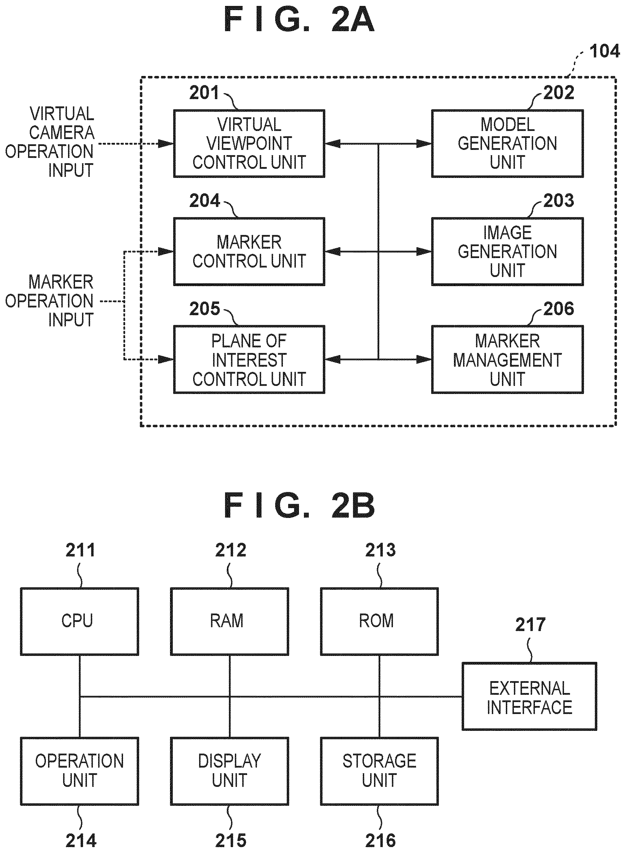

Next, the configuration of the image processing apparatus 104 will be described using FIGS. 2A and 2B. FIG 2A illustrates an exemplary functional configuration of the image processing apparatus 104. The image processing apparatus 104 includes, as its functional configuration, a virtual viewpoint control unit 201, a model generation unit 202, an image generation unit 203, a marker control unit 204, a plane of interest control unit 205, and a marker management unit 206, for example. Note that these are merely an example, and at least a portion of the shown functions may be omitted, or another function may be added. Also, a portion or all of the shown functions shown in FIG 2A may be replaced by another functional block, as long as the later-described functions are executable. Also, two or more functional blocks shown in FIG 2A may be integrated into one functional block, or one functional block may be divided into a plurality of functional blocks.

The virtual viewpoint control unit 201 accepts a user operation regarding the virtual viewpoint 110, and controls the motion of the virtual viewpoint such as movement and rotation. A touch panel, a joystick, or the like is used by the user to operate the virtual viewpoint, but there is no limitation to this, and the user operation may be accepted using any device. Also, the virtual viewpoint control unit 201 may also perform acceptance and control of a user operation regarding the timecode.

The model generation unit 202 obtains multi-viewpoint images corresponding to the timecode designated by a user operation or the like from the database 103, and generates a three-dimensional model that indicates the three-dimensional shape of a photographic subject included in the photographic subject area 120. The model generation unit 202 obtains a foreground image in which a foreground area corresponding to the photographic subject such as a person or a ball is extracted from the multi-viewpoint images, and a background image in which a background area other than the foreground area is extracted, for example. Also, the model generation unit 202 generates a foreground three-dimensional model based on a plurality of foreground images. The three-dimensional model is constituted by a point group or the like that is generated by a shape estimation method such as Visual Hull, for example. Note that the format of the three-dimensional shape data representing the object shape is not limited to this, and three-dimensional data represented by a mesh or in an original format may also be used. Note that the model generation unit 202 may similarly generate a background three-dimensional model, but regarding the background three-dimensional model, a model generated by an external apparatus in advance may be obtained. For the sake of convenience, the foreground three-dimensional model and the background three-dimensional model are together referred to as a "photographic subject three-dimensional model" or simply "three-dimensional model".

The image generation unit 203 generates, based on the three-dimensional model of the photographic subject and a virtual viewpoint, a virtual viewpoint image that reproduces a scene when viewed from the virtual viewpoint. For example, the image generation unit 203 obtains an appropriate pixel value from the multi-viewpoint images for each of the points that constitute the three-dimensional model, and performs coloring processing. Also, the image generation unit 203 locates the three-dimensional model in a three-dimensional virtual space, and generates a virtual viewpoint image by projecting or rendering the three-dimensional model to the virtual viewpoint along with the pixel values. Note that the method of generating a virtual viewpoint image is not limited to this, and another method such as a method of generating a virtual viewpoint image by performing projection conversion of a captured image without using the three-dimensional model may also be used. Also, the image generation unit 203 also renders a marker object generated based on a later-described marker input on the virtual viewpoint image based on the virtual viewpoint and the position of the marker object in the three-dimensional virtual space, in addition to the photographic subject three-dimensional model.

The marker control unit 204 accepts an input of a marker such as a line or a circle to the virtual viewpoint image. The marker control unit 204 converts the marker input performed on the two-dimensional virtual viewpoint image to a marker object of three-dimensional data in a virtual space that is the same as the virtual space in which the photographic subject is to be located. The plane of interest control unit 205 accepts a user input regarding the plane of interest, which will be described later, and controls the plane of interest based on the user input. In the present embodiment, when the input marker is converted to a marker object, a plane (plane of interest) designated in the virtual space is used. The marker control unit 204 converts the input marker to a marker object using at least one plane of interest based on control performed by the plane of interest control unit 205. These series of processing will be described later.

The marker control unit 204 transmits an instruction, to the image generation unit 203, to generate a virtual viewpoint image in which the three-dimensional model of the photographic subject and the marker object are combined according to the position and orientation of the virtual viewpoint. Note that the marker control unit 204 provides the marker object to the image generation unit 203 as a three-dimensional model, and the image generation unit 203 may generate a virtual viewpoint image by handling the marker object similarly to the photographic subject, for example. Also, the image generation unit 203 may execute processing for superimposing a marker object based on the marker object provided by the marker control unit 204, separately from the processing for generating the virtual viewpoint image. Also, a configuration may also be adopted in which the marker control unit 204 executes processing for superimposing a marker that is based on the marker object on the virtual viewpoint image provided by the image generation unit 203.

The marker management unit 206 performs storage control for storing, in a later-described storage unit 216 or the like, information with which the marker object of a three-dimensional model obtained by conversion performed by the marker control unit 204 and the plane of interest can be specified. The marker management unit 206 performs storage control such that information regarding the marker object and the plane of interest are stored in association with the timecode, for example. Note that the model generation unit 202 may calculates, for each object such as a foreground person or ball, the coordinates thereof, and accumulates the coordinates in the database 103, and the coordinates for each object may be used to designate the coordinates of the marker object.

FIG 2B illustrates an exemplary hardware configuration of the image processing apparatus 104. The image processing apparatus 104 includes, as its hardware configuration, a CPU 211, a RAM 212, a ROM 213, an operation unit 214, a display unit 215, a storage unit 216, and an external interface 217, for example. Note that CPU is an abbreviation of Central Processing Unit, RAM is an abbreviation of Random Access Memory, and ROM is an abbreviation of Read Only Memory.

The CPU 211 executes overall control on the image processing apparatus 104 and the later-described processing using programs and data that are stored in the RAM 212 and ROM 213, for example. As a result of the CPU 211 executing a program stored in the RAM 212 or ROM 213, the functional blocks in FIG 2A may be realized. Note that a configuration may also be adopted in which the image processing apparatus 104 includes, other than the CPU 211, at least one dedicated hardware such as a processor, and the hardware executes a portion of the processing performed by the CPU 211. The dedicated hardware may be a micro processing unit (MPU), an application-specific integrated circuit (ASIC), a field programmable gate array (FPGA), a digital signal processor (DSP), or the like, for example. The ROM 213 retains programs and data for executing processing to be performed on a virtual viewpoint image and a marker. The RAM 212 temporarily stores a program or data that is read out from the ROM 213, and provides a work area to be used by the CPU 211 when executing pieces of processing.

The operation unit 214 is constituted by devices for accepting operations made by a user, such as a touch panel and buttons, for example. The operation unit 214 obtains information indicating an operation regarding the virtual viewpoint, marker, and plane of interest made by the user, for example. Note that the operation unit 214 may be connected to an external controller, and accept user input information regarding the operation. The external controller is not specifically limited, but is a three-axis controller such as a joystick, a keyboard, a mouse, or the like. The display unit 215 is constituted by a display device such as a display. The display unit 215 displays a virtual viewpoint image generated by the CPU 211 or the like, for example. Also, the display unit 215 may include various types of output devices that can present information to a user, such as a speaker for sound output or a device for vibration output. Note that the operation unit 214 and the display unit 215 may be integrally constituted by a touch panel display, for example.

The storage unit 216 is constituted by a mass storage such as a solid state drive (SSD) or a hard disk drive (HDD), for example. Note that this is merely an example, and the storage unit 216 may be constituted by any other storage device. The storage unit 216 stores data to be processed by a program. The storage unit 216 stores a three-dimensional marker object obtained by a marker input accepted via the operation unit 214 being converted by the CPU 211. The storage unit 216 may further store another information. The external interface 217 is constituted by an interface device for connecting to a network such as a local area network (LAN). Information is transmitted and received to and from an external apparatus such as the database 103 via the external interface 217. Also, the external interface 217 may be constituted by an image output port such as a high-definition multimedia interface (HDMI) (registered trademark) or a serial digital interface (SDI). In this case, information may be transmitted to an external display device or a projection device via the external interface 217. Also, connection to a network is made using the external interface 217, and the operation information regarding the virtual viewpoint or marker may be received and the virtual viewpoint image may be transmitted via the network.

### (Virtual Viewpoint, Line of Sight Direction, and Plane of interest)

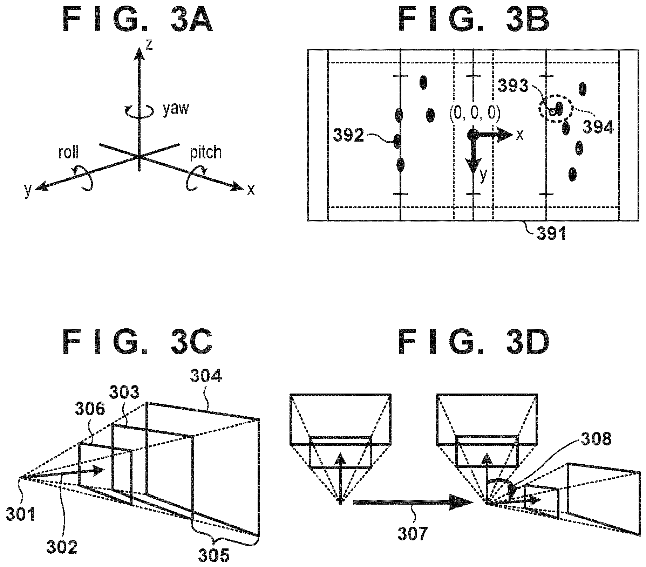

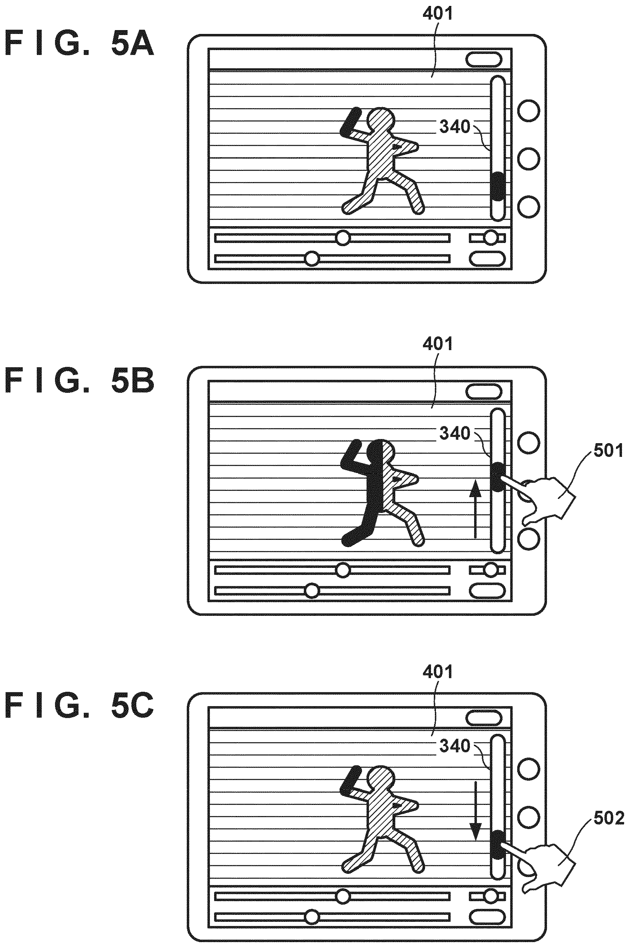

Next, the virtual viewpoint 110 will be described using FIGS. 3A to 3F. The virtual viewpoint 110 and its motion are designated using one coordinate system that defines the virtual space. In the present embodiment, an ordinary rectangular coordinate system, in a three-dimensional space, that is constituted by an X axis, a Y axis, and a Z axis, as shown in FIG 3A, is used as the coordinate system. Note that this is merely an example, and any coordinate system with which a position in a three-dimensional space can be designated may also be used. Using this coordinate system, the coordinates of a photographic subject is set and used. The photographic subject includes a stadium field, a studio, and the like, and a person and an object such as a ball that are present in a space such as the field or studio, for example. For example, in the example in FIG 3B, the entirety of the stadium field 391, persons 392 such as players and another object (e.g., a ball 393) that are present in the field 391 are included as the photographic subjects. Note that spectator seats and the like around the field may also be included in the photographic subjects. Note that a marker object 394 generated from a marker input made by a user operation, which will be described later using FIGS. 5A to 5C is also included in the virtual space. In the example in FIG 3B, the coordinates at the center of the field 391 is set as an origin (0, 0, 0), the X axis is in a long side direction of the field 391, the Y axis is in a short side direction of the field 391, and the Z axis is in a vertical direction relative to the field 391. As a result of setting the coordinates of each photographic subject with the center of the field 391 being the reference, a three-dimensional model generated from the photographic subject and a marker object generated based on a marker input are located in the three-dimensional virtual space. Note that the coordinate setting method is not limited to this.

Next, the virtual viewpoint will be described using FIGS. 3C and 3D. The virtual viewpoint defines the viewpoint and line of sight direction for generating a virtual viewpoint image. In FIG 3C, the vertex of a square pyramid indicates a virtual viewpoint position 301, and the vector extending from the vertex indicates a line of sight direction 302. The virtual viewpoint position 301 is expressed by coordinates (x, y, z) in the three-dimensional virtual space, and the line of sight direction 302 is expressed by a unit vector having axis components as scalars. The line of sight direction 302 is also referred to as an optical axis vector of the virtual viewpoint. The line of sight direction 302 is assumed to pass through the center points of a near clip plane 303 and a far clip plane 304. Note that the clip planes are planes for defining an area to be rendered. A space 305 sandwiched between the near clip plane 303 and the far clip plane 304 is referred to as a view frustum of the virtual viewpoint, and the virtual viewpoint image is generated in this range (or the virtual viewpoint image is projected and displayed in this range). Note that, in the present embodiment, a case where a view frustum in which the clip planes are quadrangles is used, as a general shape, will be described, but the clip plane may be constituted by a polygon of a pentagon or more, for example. Pieces of three-dimensional data of the photographic subject and the marker object that are present in this range are projected on the projection plane 306, and with this, the virtual viewpoint image is generated. Note that the distance from the virtual viewpoint position 301 to the projection plane 306 is referred to as a focal distance. Any value can be set as the focal distance (not shown), and the angle of view is changed by changing the focal distance, similarly to an ordinary camera. That is, as a result of reducing the focal distance, the angle of view is widened, and the view frustum can be widened. On the other hand, as a result of increasing the focal distance, the angle of view can be narrowed, and the photographic subject can be captured in a large size by narrowing the view frustum. Note that the width and height of the projection plane 306 may be the width and height of a rectangle that is in contact with the view frustum 305 of a virtual camera.

The position of the virtual viewpoint and the line of sight direction from the virtual viewpoint can be moved and rotated in a virtual space expressed by three-dimensional coordinates. As shown in FIG 3D, a movement 307 of the virtual viewpoint is a movement of the virtual viewpoint position 301, and is expressed by axis components (x, y, z). A rotation 308 of the virtual viewpoint is expressed by a yaw, which is a rotation about Z axis, a pitch, which is a rotation about X axis, and a roll, which is a rotation about Y axis, as shown in FIG 3A. Accordingly, the position of the virtual viewpoint and the line of sight direction from the virtual viewpoint can be freely moved and rotated in the three-dimensional virtual space, and the image processing apparatus 104 can reproduce an image, which is an image obtained when any area of the photographic subject is assumed to be observed from any angle, as a virtual viewpoint image. Note that the position of the virtual viewpoint and the line of sight direction from the virtual viewpoint are collectively referred to as a "virtual viewpoint" below, if there is no need to distinguish between the position and the line of sight direction.

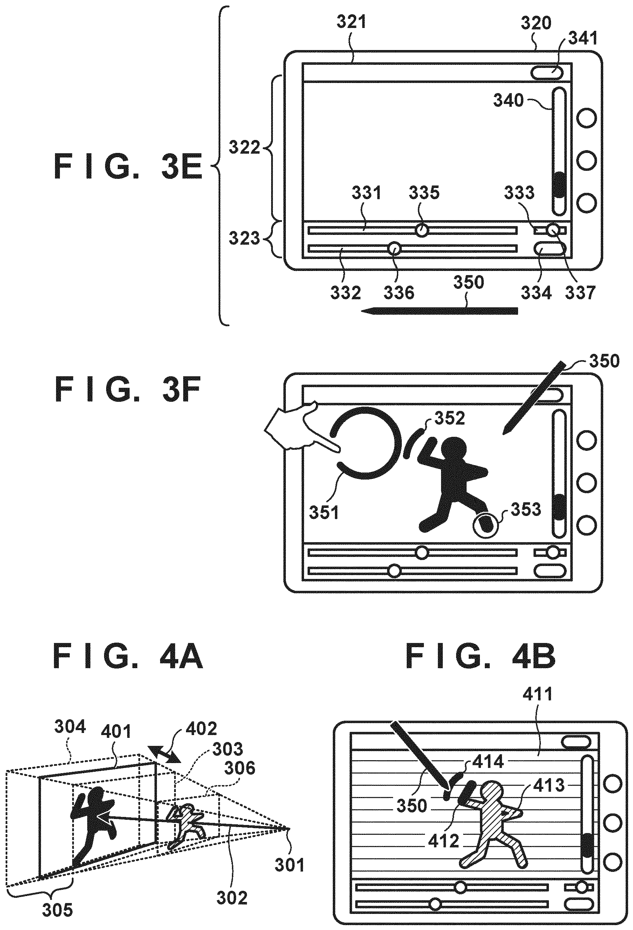

The virtual viewpoint and a marker operation method will be described using FIGS. 3E and 3F. FIG 3E is a diagram for describing a screen to be displayed by the image processing apparatus 104. Here, a case of using a tablet terminal 320 including a touch panel display will be described. Note that the terminal 320 need not be a tablet terminal, and any information processing device having any form may be used as the terminal 320. When the terminal 320 is an image processing apparatus 104, the terminal 320 is configured to generate and display a virtual viewpoint image, and in addition thereto, accept operations to designate the virtual viewpoint and timecode and to input a marker and the like. On the other hand, when the terminal 320 is a device that connects to the image processing apparatus 104 via a communication network, for example, the terminal 320 transmits information for designating the virtual viewpoint and timecode to the image processing apparatus 104, and receives provision of a virtual viewpoint image. Also, the terminal 320 accepts a marker input operation on a virtual viewpoint image, and transmits information indicating the accepted marker input to the image processing apparatus 104.

In FIG 3E, the display screen 321 in the terminal 320 is roughly divided between two areas, namely a virtual viewpoint operation area 322 and a time code operation area 323.

In the virtual viewpoint operation area 322, a user operation regarding the virtual viewpoint is accepted, and a virtual viewpoint image is displayed in its area range. That is, in the virtual viewpoint operation area 322, the virtual viewpoint is operated, and the virtual viewpoint image that reproduces a scene when an observation is assumed to be performed from the operated virtual viewpoint is displayed. Also, in the virtual viewpoint operation area 322, a marker input on a virtual viewpoint image is accepted. Note that the marker operation and the virtual viewpoint operation may be executed in combination, but in the present embodiment, it is assumed that the marker operation and the virtual viewpoint operation are independently accepted. In one example, as in the example in FIG 3F, the virtual viewpoint may be operated by a touch operation such as tapping or dragging made by a user's finger on the terminal 320, and the marker operation may be performed by tapping, dragging, or the like by a rendering device such as a pencil 350. A user moves and rotates the virtual viewpoint by a drag operation 351 made by a finger, for example. Also, the user renders a marker 352 and a marker 353 on a virtual viewpoint image by a drag operation made by the pencil 350. The terminal 320 renders a marker based on continuous coordinates of the drag operation made by the pencil 350. Note that the configuration may be such that a finger operation is assigned to a marker operation, and a pencil operation is assigned to a virtual viewpoint operation. Also, any other operation methods may also be used as long as the terminal 320 can discriminate between the virtual viewpoint operation and the marker operation. For example, by performing a tap operation, a virtual camera may be moved and rotated to the coordinates corresponding to the tapped position, for example. According to such a configuration, the user can easily distinguishably use the virtual viewpoint operation and the marker operation.

Note that when the virtual viewpoint operation and the marker operation are independently executed, the rendering device such as the pencil 350 need not be used. For example, an ON/OFF button (not shown) regarding the marker operation is provided in the touch panel, and whether or not the marker operation is to be performed is switched by a button operation performed on the ON/OFF button. For example, a configuration may be adopted in which when the marker operation is to be performed, the button is switched ON, and the virtual viewpoint operation cannot be performed while the button is ON. Also, when the virtual viewpoint operation is to be performed, the button is switched OFF, and the marker operation cannot be performed while the button is OFF.

The time code operation area 323 is used to designate a timing of the virtual viewpoint image to be viewed. The time code operation area 323 includes a main slider 331, a sub slider 332, a speed designation slider 333, and a cancel button 334, for example. The main slider 331 is used to accept any timecode selected by the user performing a drag operation or the like of a knob 335 to change the position thereof. The range of the main slider 331 indicates the entirety of a period in which the virtual viewpoint image can be reproduced. The sub slider 332 displays a portion of the timecode in an enlarged manner, and enables the user to execute detailed timecode operation such as being in units of frames. In the sub slider 332, any detailed timecode is accepted that is selected by the user performing a drag operation or the like of a knob 336 to change the position thereof.

In the terminal 320, a rough designation of the timecode is accepted using the main slider 331, and a detailed designation of the timecode is accepted using the sub slider 332. For example, the main slider 331 and the sub slider 332 are set such that the main slider 331 corresponds to a three-hour range corresponding to a total game length, and the sub slider 332 corresponds to a time range of about 30 seconds, which is a portion of the three-hour range. For example, a section of 15 seconds before and 15 seconds after the timecode designated by the main slider 331, or a section of 30 seconds after the timecode may be represented by the sub slider 332. Also, a configuration may also be adopted in which the entire range is divided into sections of 30 seconds in advance, and the section including the timecode designated by the main slider 331, of these sections, is represented by the sub slider 332. As described above, the time scale is different between the main slider 331 and the sub slider 332. Note that the aforementioned time lengths are merely an example, and the sliders may also be configured to correspond to other time lengths. Note that a user interface may be prepared with which the setting of the time length corresponding to the sub slider 332 can be changed, for example. Also, in FIG 3E, an example is illustrated in which the main slider 331 and sub slider 332 are displayed with the same length on the screen, but the lengths may be different to each other. That is, the main slider 331 may be longer, or the sub slider 332 may be longer. Also, the sub slider 332 may not be continuously displayed. For example, the sub slider 332 may be displayed after a display instruction has been accepted, or the sub slider 332 may be displayed when a specific operation such as a momentary pause has been instructed. Also, the designation and display of the timecode may be performed without using the knob 335 of the main slider 421 and the knob 336 of the sub slider 332. For example, the timecode may be designated and screen-displayed using numerical values such as numerical values in a format of day:hour:minute: second. frame number.

The speed designation slider 333 is used to accept user designation of the reproduction speed such as actual speed reproduction or slow reproduction. For example, the count up interval of the timecode is controlled according to the reproduction speed selected using a knob 337 of the speed designation slider 333. The cancel button 334 may be used to cancel the operations regarding the timecode. Also, the cancel button 334 may also be used to clear the momentary pause, and to return the reproduction speed to the normal reproduction. The button is not limited to the cancel button as long as being able to perform an operation regarding the timecode.

A plane of interest setting slider 340 and a plane of interest add button 341 will be described later.

Using the screen configuration described above, the user can display, in the terminal 320, a virtual viewpoint image that is an image obtained by viewing the three-dimensional model of the photographic subject from any position and orientation at any timecode by operating the virtual viewpoint and timecode. Also, the user can set a plane of interest and input a marker on such a virtual viewpoint image, independently from the virtual viewpoint operation.

### (Plane of interest and Marker Object)

In the present embodiment, a marker input to a two-dimensional virtual viewpoint image, as described above, is converted to a marker object of three-dimensional data using a plane of interest. This will be described using FIGS. 4A to 4E.

FIG 4A is a diagram for describing the relationship between a virtual viewpoint and a plane of interest. In FIG 4A, the plane of interest 401 is positioned inside a view frustum 305 of the virtual viewpoint. Also, the plane of interest 401 is a plane that is continuously set as a plane perpendicular to the line of sight direction 302 (optical axis) of the virtual viewpoint, and is a plane parallel to the projection plane 306. As described above, the position of the plane of interest 401 is changed according to the position and orientation of the virtual viewpoint. Note that the initial size of the plane of interest 401 may be set to the width and height of a rectangle that is in contact with the view frustum 305 of the virtual camera. That is, the size of the plane of interest 401 may be determined such that the four sides of the plane of interest 401 are respectively overlaid on four side faces of the view frustum 305. Also, the size of the plane of interest 401 may be determined to a size of a rectangle that is obtained by narrowing or widening, in each side, the rectangle that is in contact with the view frustum 305 by a predetermined width, for example. That is, the initial size of the plane of interest 401 may be set according to the size of the view frustum 305. Note that there is no limitation to this, and the initial size of the plane of interest 401 may be determined by a user input, or a predetermined size that is smaller than the rectangle that is in contact with the view frustum 305, for example. The distance from the virtual viewpoint position 301 to the plane of interest 401 can be changed in a range 402 in which the plane of interest 401 is included in the view frustum 305. The method of changing the distance from the virtual viewpoint position 301 to the plane of interest 401 will be described later.

As described above, the plane of interest 401 is positioned in a range included in the view frustum 305, that is, positioned between the near clip plane 303 and the far clip plane 304. Therefore, similarly to the three-dimensional data of the photographic subject, the plane of interest 401 can be rendered as a virtual viewpoint image by being projected on the projection plane 306. For example, as shown in FIG 4B, the plane of interest 401 can be rendered in a virtual viewpoint image as a translucent plane 411. Accordingly, as a result of the plane of interest 401 being rendered translucently, the superposition relationship between the plane of interest and the photographic subject in a two-dimensional virtual viewpoint image can be clearly shown to the user. Note that the translucent plane 411 may be referred to as a plane of interest 401 below.

Here, a first range, of the three-dimensional model of the photographic subject, that is present on a near side relative to the plane of interest 401 when viewed from the virtual viewpoint, and a second range that is present behind the plane of interest 401 may be discriminably displayed using different colors or the like. In FIGS. 4A and 4B, an example is shown in which a three-dimensional model that represent a pitching scene of a photographic subject is reproduced in the view frustum 305 of the virtual viewpoint, and is rendered on the virtual viewpoint image. Also, in this example, as shown in FIG 4B, the plane of interest 401 is set in the vicinity of an arm of the photographic subject, a right arm portion (range 412) that is present on the virtual viewpoint side relative to the plane of interest 401 is expressed by a deep color, and the remaining most of the body (range 413) that is present behind the plane of interest 401 is expressed by a light color. Accordingly, the user can easily and intuitively recognize that the plane of interest 401 is positioned in the vicinity of the right arm of the photographic subject. Note that this is merely an example, and a front portion and a rear portion of the three-dimensional model of the photographic subject relative to the plane of interest 401, when viewed from the virtual viewpoint, may be distinguishably expressed using any expression that can be recognized by the user.

Here, as shown in FIG 4B, a method of converting a marker 414 to a three-dimensional marker object using the plane of interest 401 will be described, assuming that the marker 414 is input to the virtual viewpoint image using the pencil 350.

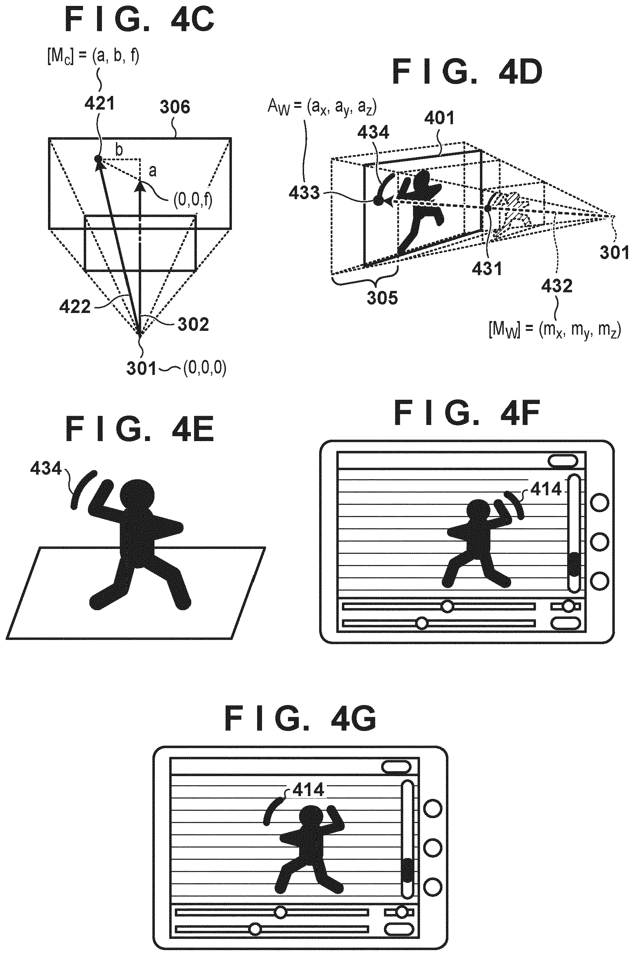

FIG 4C is a conceptual diagram in which an area from the virtual viewpoint position 301 to the projection plane 306 in FIG 4A is extracted and displayed. The virtual viewpoint image displayed as in FIG 4B is an image obtained by the three-dimensional model inside the view frustum 305 being projected on the projection plane 306, and therefore the marker 414 input to this virtual viewpoint image is regarded as an input to the projection plane 306 of the virtual viewpoint. Here, the direction and size of a line from the virtual viewpoint position 301 to a point 421 that is on a locus of the marker 414 input to the projection plane 306 is referred to as a marker input vector 422. Note that the locus of the marker 414 is regarded as a set of points, and a marker input vector may be specified for each point included in the set. Note that, here, in order to simplify the description, description will be given focusing on one point 421.

In FIG 4C, when consideration is given assuming a camera coordinate in which the virtual viewpoint position 301 is an origin (0, 0, 0), the center point of the projection plane, which is an intersection point between the line of sight direction 302 (optical axis) of the virtual camera and the projection plane 306 can be expressed as (0, 0, f). Here, f is a focal distance of the virtual viewpoint. On the other hand, the coordinates of the point 421 on the locus of the marker 414 is assumed to be a point that is shifted from the center point on the projection plane 306 by a in an x direction and b in a y direction. In this case, the marker input vector 422 in the camera coordinate is expressed by [M_{c}]=(a, b, f). This marker input vector 422 in the camera coordinate is converted to a marker input vector [M_{W}]=(mₓ, m_{y}, m_{z}) in a world coordinate system. That is, the marker input vector [M_{W}] in the world coordinate system is specified by calculating [M_{W}]=Qₜ[M_{c}] using a quaternion Qt obtained from a rotation matrix that indicates the line of sight direction 302 of the virtual camera. In this way, the marker input vector [M_{W}] in the world coordinate system is specified based on the line of sight direction 302 of the virtual camera. Note that the calculation method using the rotation matrix of the virtual camera and the quaternion is commonly known, and therefore the description thereof will be omitted.

In this way, the marker input vector 422 from the virtual viewpoint position 301 to the point 421 in the camera coordinate system in FIG 4C is converted to the marker input vector 432 from the virtual viewpoint position 301 to a point 431 in the world coordinate system in FIG 4D. Also, an intersection point 433 between the marker input vector 432 and the plane of interest 401 is specified using an ordinary intersection point calculation method between a vector and a plane. Here, it is assumed that the coordinate of the intersection point 433 in the world coordinate system is expressed as A_{W}=(aₓ, a_{y}, a_{z}). The point at this coordinates A_{W} is specified as a point that constitutes a marker object corresponding to the point 431 on the marker 414. In this way, a marker input vector is specified for each point of the point group that constitutes the marker 414, and the intersection point between the marker input vector and the plane of interest 401 is specified as a point that constitutes the marker object. Also, the marker object is specified by linking these points. With this, a marker object of three-dimensional data corresponding to the marker 414 is constructed on the plane of interest 401. In this way, a three-dimensional model 434 of the marker object is generated in the same virtual space as the photographic subject three-dimensional model, as shown in FIG 4E. Accordingly, the marker object 434 is located in the same three-dimensional space as the photographic subject, as a three-dimensional object that is in contact with the plane of interest 401.

When such a marker object is not generated, according to a movement and rotation of the virtual viewpoint, inconsistency occurs between the photographic subject in the virtual viewpoint image and the intended content of the marker 414, as shown in FIG 4G, for example, and the content of the marker is difficult to understand. On the other hand, as a result of the three-dimensional marker object being generated as described above, even if the virtual viewpoint moves and rotates after the marker has been input, the positional relationship between the three-dimensional model of the photographic subject and the marker object 434 does not change. Therefore, in the virtual viewpoint image projected on the projection plane 306 as well, it is possible to prevent (or reduce) occurrence of inconsistency in the relationship between the photographic subject and the marker. For example, even if the virtual viewpoint is moved and rotated after the marker input has been performed as shown in FIG 4B, the positional relationship between the photographic subject and the marker 414 may be maintained, as shown in FIG 4F.

### (Operation of Distance of Plane of interest)

Next, an example of the method of operating the plane of interest will be described using FIGS. 5A to 5C.

As described using FIG 4A, the plane of interest 401 moves according to the position of the virtual viewpoint and the line of sight direction. Also, the distance from the virtual viewpoint position 301 to the plane of interest 401 inside the view frustum 305 can be changed inside the range 402 of the view frustum 305. This change of distance is performed by accepting a user operation performed on the slider 340 in the display screen 321, as shown in FIG 3E, for example.

For example, it is assumed that the knob of the slider 340 is moved upward by a user operation 501 from the situation in FIG 5A, and the state as shown in FIG 5B is achieved. It is assumed that, by this operation, the plane of interest 401 separates from the virtual viewpoint position 301 and moves in a direction to approach the far clip plane 304. As a result, as in an image in FIG 5B in which the right half of the body of the photographic subject is displayed in a deep color and the remaining left half of the body is displayed in a light color, many more portions of the photographic subject are included in a range between the plane of interest 401 and the virtual viewpoint position 301, compared with the case in FIG 5A. Thereafter, it is assumed that the knob of the slider 340 is moved downward by a user operation 502 so as to return to the same position as in the situation in FIG 5A from the situation in FIG 5B, and the state as shown in FIG 5C is achieved. It is assumed that, by this operation, the plane of interest 401 moves toward the virtual viewpoint position 301, and approaches the near clip plane 303. As a result, as in an image in FIG 5C in which only the right arm portion of the photographic subject is displayed in a deep color, and the remaining portion is represented by a light color, the portion of the photographic subject that is included in a range between the plane of interest 401 and the virtual viewpoint position 301 decreases, compared with the case in FIG 5B.

As described above, the distance from the virtual viewpoint position 301 to the plane of interest 401 can be freely set in a range 402 of the view frustum 305 of the virtual viewpoint by a user operation. Note that the method of operating and setting the plane of interest is not limited to the method described above, and setting may also be performed using another method based on the virtual viewpoint.

### (Setting of Plurality of Planes of Interest)

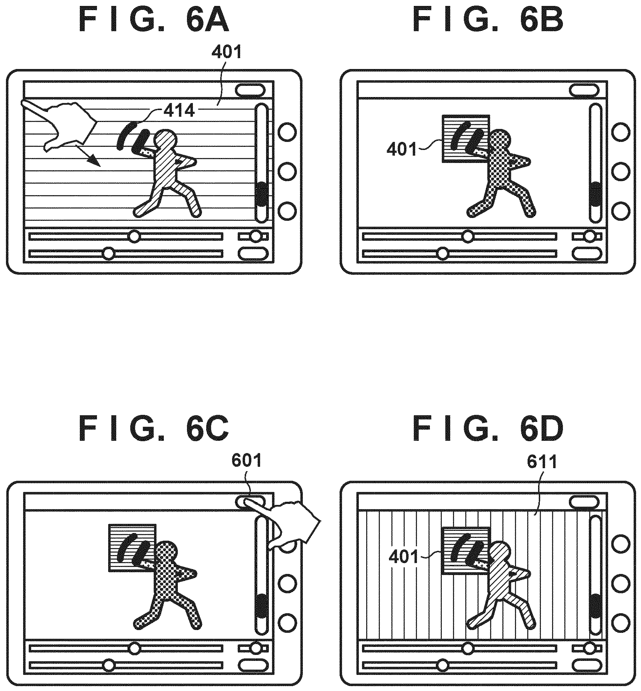

Regarding the plane of interest described above, a plurality of planes of interest may also be set. A method of operating a plurality of planes of interest, and a method of generating a marker object using the plurality of planes of interest will be described using FIGS. 6A to 6E.

Here, as an initial state, a state is assumed in which one marker 414 has been input as described regarding FIG 4B. FIG 6A shows a state in which, in such a state, a user selects and drags an upper left corner of the plane of interest 401. With this drag operation, the size of the plane of interest 401 is changed. For example, as a result of the user performs dragging in a lower right direction, in a state of selecting the upper left corner in a state in FIG 6A, the plane of interest 401 is narrowed in the lower right direction, and an area that is not set as the plane of interest 401 is generated at a left end and an upper end. Similarly, as a result of the user performs dragging in an upper left direction, in a state of selecting a lower right corner, for example, the plane of interest 401 is narrowed in an upper left direction, and an area that is not set as the plane of interest 401 is generated at a right end and a lower end. By performing such an operation, the plane of interest 401 can be set only in the vicinity of the right arm of the photographic subject, as shown in FIG 6B. Note that the user operation may be performed by a drag operation starting from any of four corners of the plane of interest 401, for example, but may also be performed by a drag operation starting from any of four sides, for example. Also, a configuration may be adopted in which, when a corner is selected, an operation to change two sides by moving the corner (vertex) is accepted, and on the other hand, when a side is selected, only an operation to perform parallel movement of the side is accepted. Also, as a result of the user rendering any closed area inside the plane of interest 401 using the pencil 350 or the like, a rectangular area that is in contact with the area may be set as the size-changed plane of interest 401, for example. Also, the plane of interest 401 need not be a rectangular area, and the initial shape may be any shape, and a change to any shape may also be accepted.

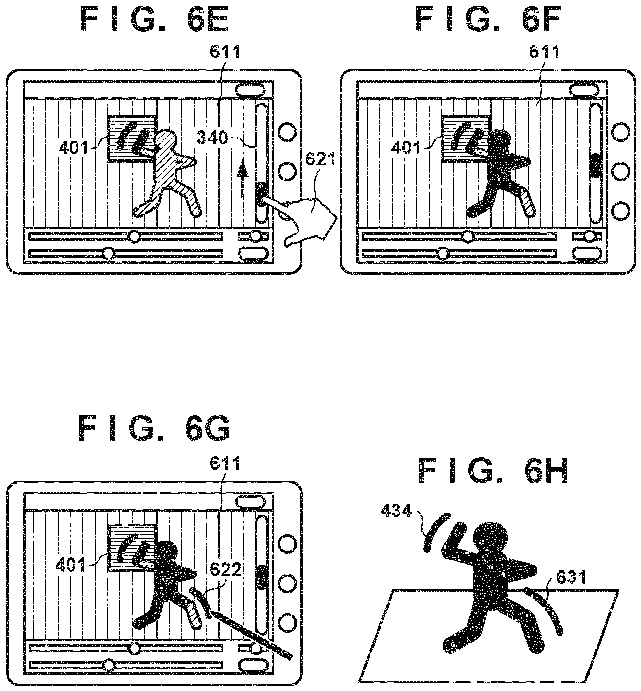

The user can set an additional plane of interest 611, as shown in FIG 6D, by pressing a plane of interest add button 601, as shown in FIG 6C, for example, after the plane of interest 401 has been set as shown in FIG 6B. The operations that are the same as those described in relation to FIGS. 5A to 5C may be applied to the added plane of interest 611. For example, as shown in FIG 6E, when the knob of the slider 340 is moved upward by a user operation 621, the plane of interest 611 moves toward the far clip plane 304 separating from the virtual viewpoint position 301, while the plane of interest 401 is kept to be the same. It is assumed that, as a result, only the left leg portion of the photographic subject is present behind the plane of interest 611 (on the far clip plane 304 side), and the other portions are present on the near side (near clip plane 303 side) relative to the plane of interest 611. In this case, as shown in FIG 6F, in the plane of interest 611, most of the portions of the photographic subject is displayed in a deep color, and the remaining left leg is represented by a light color.

Also, as shown in FIG 6G, in the state of FIG 6F, an input of a marker 622 to the plane of interest 611 in the vicinity of the left leg portion of the photographic subject may be accepted, for example, by a user operation. As a result of this marker 622 being converted to a marker object as described above, the marker object 631 obtained by the conversion is located in the vicinity of the left leg of the photographic subject in the three-dimensional space as well, as shown in FIG 6H. That is, when only one plane of interest can be set, the marker object 434 in the vicinity of the right arm of the photographic subject and the marker object 631 are located in the same plane, and the marker object 631 may be located at a position separated from the left leg, for example. In contrast, as a result of enabling a plurality of planes of interest to be set, the marker object 434 and the marker object 631 are respectively located in planes that are different to each other. Therefore, marker objects are each located at an appropriate position in a three-dimensional space. Also, even if the virtual viewpoint is moved and rotated after the marker input has been performed, as shown in FIG 6G, the positional relationship between the photographic subject, the marker 414, and the marker 622 can be maintained.

Note that, in FIG 6F, the plane of interest 401 is not moved, and therefore the screen display corresponding to the area of the plane of interest 401 does not change. Note that the plane of interest 401 and the plane of interest 611 may be initially set to the same size, shape, and position. In this case, in response to an operation to add a plane of interest being performed, after an operation to change the position and size of the plane of interest 401 from the initial position and size, a different plane having an initial position and an initial size that are the same as those of the plane of interest 401 may be newly added as the plane of interest 611. Note that, in the example in FIG 6F, the plane of interest 611 is present behind the plane of interest 401, and therefore the display of the plane of interest 401 does not change, but when the plane of interest 611 is located on the near side of the plane of interest 401, for example, a translucent plane indicating the plane of interest 611 may be displayed in an overlaid manner on the plane of interest 401. As described above, values that are different to each other can be set to the distances of the plane of interest 401 and plane of interest 630 from the virtual viewpoint position 301.

Here, a configuration may also be adopted in which, after two planes of interest have been set, an operation to select a plane of interest to be set from the two planes of interest is accepted, for example, the plane of interest 401 is set again after setting the plane of interest 611, for example. For example, in the example in FIG 6D, a user operation for the plane of interest 401 may be accepted by selecting the area of the plane of interest 401, and a user operation for the plane of interest 611 may be accepted by selecting an area other than the plane of interest 401. Also, when a double tap or the like by the pencil 350 is accepted at a position at which a plurality of planes of interest are set, the plane of interest to be processed may be sequentially changed. In this case, information with which the plane of interest to be processed can be specified may be presented. For example, the frame of the plane of interest to be processed may be rendered by a thick line, or a character string indicating the selected plane of interest may be shown in a space to the side of the plane of interest add button 601. Also, for example, a pull-down plane of interest selection interface may be prepared to the side of the plane of interest add button 601, and the plane of interest to be operated may be able to be selected from a plurality of set planes of interest.

For example, in FIG 6G, there are two planes of interest, but only one plane of interest 611 is present at the position of the marker 622, and therefore when an input of the marker 622 is accepted, the plane of interest 611 is specified as the plane of interest to be processed. Also, a marker object corresponding to the marker 622 is generated using this plane of interest 611. On the other hand, when a plurality of planes of interest are set on the same position on the screen, processing for designating a valid plane of interest is performed as described above. Note that, in the example described above, an example was shown in which, when a plurality of planes of interest are present at the position at which a marker input was performed, a user selects which of the planes of interest is to be used, but there is no limitation to this. For example, processing for converting the input marker to a marker object may be performed using a plane of interest that is closest to the virtual viewpoint position.

Note that in the example described above, an example has been described in which, after the size of the plane of interest 401 is changed, setting of the additional plane of interest 611 is performed, but there is no limitation to this. That is, the size of the plane of interest need not be performed. Also, the number of planes of interest may be more than two.

As described above, when a marker input is performed on a two-dimensional virtual viewpoint image, a marker object can be located at an appropriate position in a three-dimensional space by setting and operating the plane of interest. Also, the three-dimensional models of the photographic subject and the marker are respectively located at appropriate positions in the virtual space, and therefore even if the virtual viewpoint is operated after the marker input, the positional relationship between the photographic subject and the marker input content is maintained. As a result, it is possible to show the marker at a position at which the user does not have uncomfortable feeling in the generated virtual viewpoint image. Also, as a result of using a plurality of planes of interest, a plurality of marker objects whose distances from the virtual viewpoint position 301 are different can be located on one two-dimensional virtual viewpoint image, for example. As a result, a plurality of marker objects can be located at a high degree of freedom, in a three-dimensional space in which a three-dimensional model of the photographic subject is located.

### (Processing Flow)

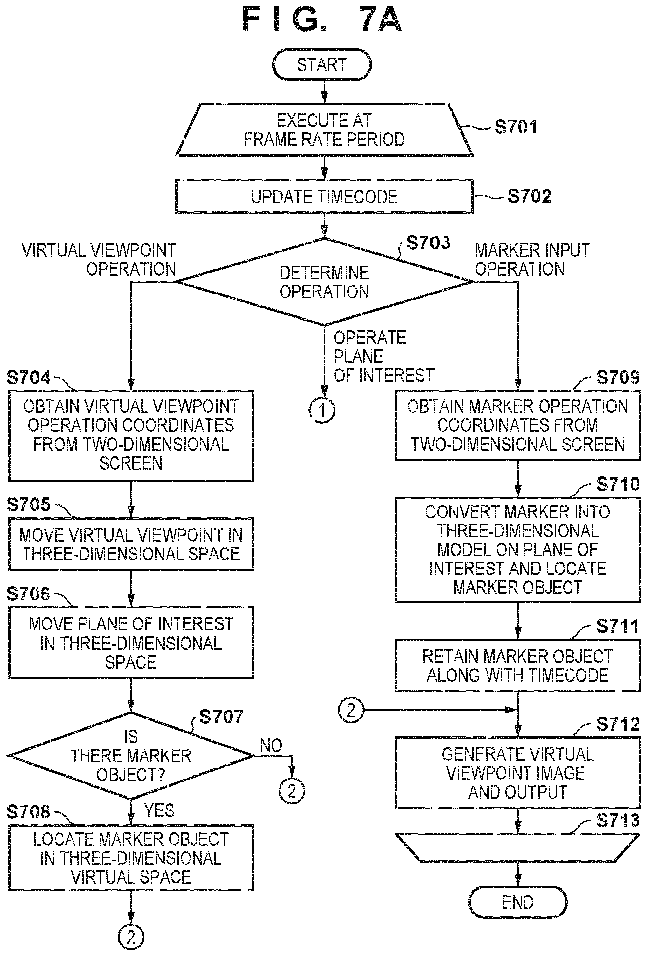

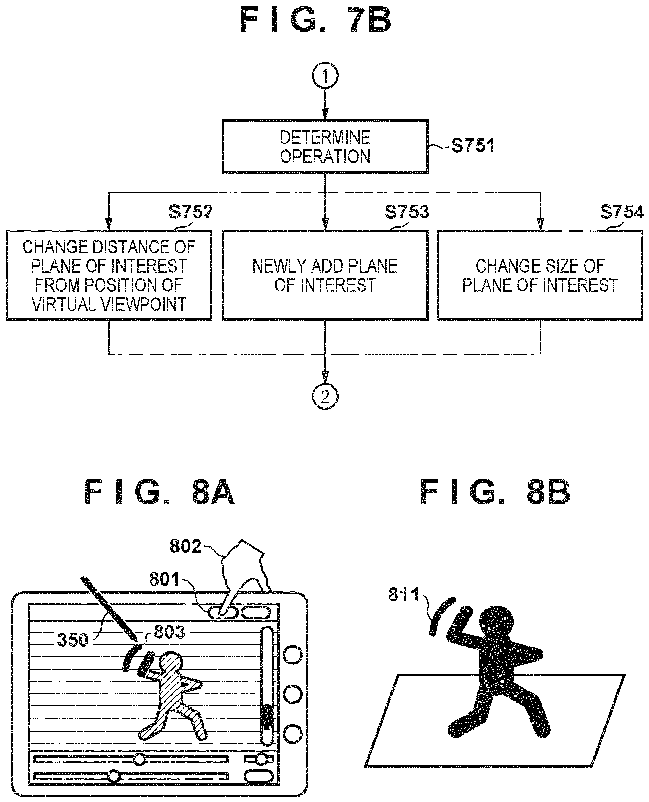

Next, an example of a flow of processing to be executed by the image processing apparatus 104 will be described using FIGS. 7A and 7B. This processing is constituted by loop processing in which processing between step S701 and step S713 is repeated, and this loop is executed at a predetermined frame rate. That is, the processing in step S702 onward is repeatedly executed at a period of the frame rate. For example, when the frame rate is 60 FPS, processing of one loop (one frame) is executed at an interval of about 16.6 [ms]. As a result, in later-described step S713, virtual viewpoint images are output at its frame rate. The frame rate may be set so as to synchronize the update rate in a screen display performed by the image processing apparatus 104 or the like, but may also be set according to the frame rate of an image capturing device that has captured a multi-viewpoint image or to the frame rate of the three-dimensional model stored in the database 103. Note that, in the description below, it is assumed that every time the loop processing is executed, the timecode is counted up by an amount corresponding to one frame, but the count-up interval of the timecode may also be changed according to a user operation or the like. For example, when a half reproduction speed is designated, one count up of the timecode frame may be performed per two sets of loop processing. Also, when a momentary pause is designated, counting up of the timecode may stop, for example.

In the loop processing, the image processing apparatus 104 updates the timecode to be processed (S702). The timecode here is represented in a format of day:hour:minute:second.frame number as described above, and an update such as counting up may be performed in units of frames. Also, the image processing apparatus 104 determines whether the accepted user operation is a virtual viewpoint operation, a marker input operation, or a plane of interest operation (S703). Note that the operation types are not limited to these. For example, upon accepting an operation regarding the timecode, the image processing apparatus 104 returns the processing to step S702, and may update the timecode. Also, when the image processing apparatus 104 has not accepted a user operation, the image processing apparatus 104 may proceed the processing assuming that an operation has been performed to designate the virtual viewpoint at the time of generation processing of the virtual viewpoint image immediately before. Also, the image processing apparatus 104 may determine whether a yet another operation has been accepted.

If it is determined that a virtual viewpoint operation has been accepted in step S703, the image processing apparatus 104 obtains two-dimensional coordinates of operation regarding the virtual viewpoint (S704). The two-dimensional coordinates of operation here are coordinates indicating the position at which a tap operation on a touch panel has been accepted, for example. Also, the image processing apparatus 104 performs at least one of movement and rotation of the virtual viewpoint in the three-dimensional virtual space based on the coordinates of operation obtained in step S704 (S705). The movement and rotation of the virtual viewpoint has been described regarding FIG 3D, and therefore the description will not be repeated here. Also, the processing for determining the amount of movement and rotation of the virtual viewpoint in the three-dimensional space from the two-dimensional coordinates obtained by a touch operation on the touch panel can be executed using a known technique, and therefore the detailed description thereof will be omitted here. In response to the movement or rotation of the virtual viewpoint having been performed in the processing in step S705, the image processing apparatus 104 moves the plane of interest inside the view frustum that is determined by the virtual viewpoint that has been moved or rotated (S706). Also, the image processing apparatus 104 determines whether or not a marker object is present in the range of a field of view that is determined by the virtual viewpoint that has been moved or rotated (S707), after or in parallel to the processing in steps S704 to S706. If a marker object is present in the range of a field of view that is determined by the virtual viewpoint that has been moved or rotated (YES in S707), the image processing apparatus 104 reads out the marker object, and locates the marker object in the three-dimensional virtual space (S708). After locating the marker object, the image processing apparatus 104 generates and outputs a virtual viewpoint image including the marker object (S712). That is, the image processing apparatus 104 generates, according to the virtual viewpoint, a virtual viewpoint image using a three-dimensional model of the photographic subject corresponding to the timecode updated in step S702 and the marker object located in the virtual space. Note that if a marker object is not present in the range of a field of view that is determined by the virtual viewpoint that has been moved or rotated (NO in S707), the image processing apparatus 104 generates and output a virtual viewpoint image without locating a marker object (S712).

Upon determining that a marker input operation has been accepted in step S703, the image processing apparatus 104 obtains two-dimensional coordinates of the marker operation in the virtual viewpoint image (S709). That is, the image processing apparatus 104 obtains two-dimensional coordinates of the marker input operation in the virtual viewpoint operation area 322, as described regarding FIGS. 3E and 3F. Also, the image processing apparatus 104 converts the two-dimensional coordinates of the input marker obtained in step S709 to a marker object, which is three-dimensional data in a plane of interest in the virtual space (S710). The method of converting an input marker to a marker object has been described using FIGS. 4A to 4E, and therefore the description will not be repeated here. Upon obtaining a marker object in step S710, the image processing apparatus 104 retains the marker object along with the timecode (S711). Also, the image processing apparatus 104 generates a virtual viewpoint image, according to the virtual viewpoint, using a three-dimensional model of the photographic subject corresponding to the timecode updated in step S702 and the marker object located in the virtual space (S712). Accordingly, when the virtual viewpoint image corresponding to the timecode at the time of the marker input having been performed is generated and displayed, the marker object that has been located in the virtual space in correspondence with the input marker can be rendered and displayed, in addition to the photographic subject being rendered.

Upon determining that a plane of interest operation has been accepted in step S703, the image processing apparatus 104 discriminates the operation content (S751). The image processing apparatus 104 changes the distance from the virtual viewpoint position to the plane of interest (S752), as shown in FIGS. 5A to 5C, adds a plane of interest (S753), as shown in FIGS. 6C and 6D, or changes the size of the plane of interest (S754), as shown in FIG 6A, for example.

According to the processing as described above, a marker input on a two-dimensional virtual viewpoint image can be converted to three-dimensional data using a plane of interest in a virtual space, and a three-dimensional model of the photographic subject and the marker object can be located in the same virtual space. Therefore, a virtual viewpoint image in which the positional relationship between the photographic subject and the marker is maintained even if the virtual viewpoint is at any position and orientation. Also, by setting an appropriate plane of interest in the three-dimensional space when a marker is input, a marker object can be located at an appropriate position in the virtual space. Also, by setting a plurality of planes of interest, a plurality of marker objects can be located at appropriate positions in the three-dimensional space.

### [Second Embodiment]

In the first embodiment, an example of a procedure of generating a marker object in one frame has been described. In the present embodiment, an example of a procedure of generating a marker object over a plurality of successive frames will be described using FIGS. 8A to 8F. The system configuration and the apparatus configuration of the present embodiment are similar to those of the first embodiment, and therefore the description thereof will not be repeated here.

FIG 8A shows a virtual viewpoint image in a state that is the same as the state shown in FIG 4B in the first embodiment. Note that in a screen in FIG 8A, a continuation instruction button 801 indicating that the marker input is performed over a plurality of frames is prepared. A user can set whether a function to continue the marker input over a plurality of frames is enabled or disabled by operating this continuation instruction button 801. Note that an interface in a form other than the button may also be used, as long as continuing the marker input over a plurality of frames can be specified. In the present embodiment, it is assumed that, in FIG 8A, a user operation 802 of pressing the continuation instruction button 801 is first accepted, and thereafter, an input of a marker 803 is accepted. As an example, it is assumed that, at a timing at which the photographic subject starts swinging an arm, an input of the marker 803 in the vicinity of the arm is accepted. When an input of the marker 803 is accepted, a marker object is generated based on the input marker and the plane of interest, as described in the first embodiment. It is assumed that a marker object 811 shown in FIG 8B is generated from the marker 803 in FIG 8A, and is located in the same three-dimensional space as the photographic subject. The timecode at this point in time is ww:xx:yy:zz.000, for the sake of convenience.

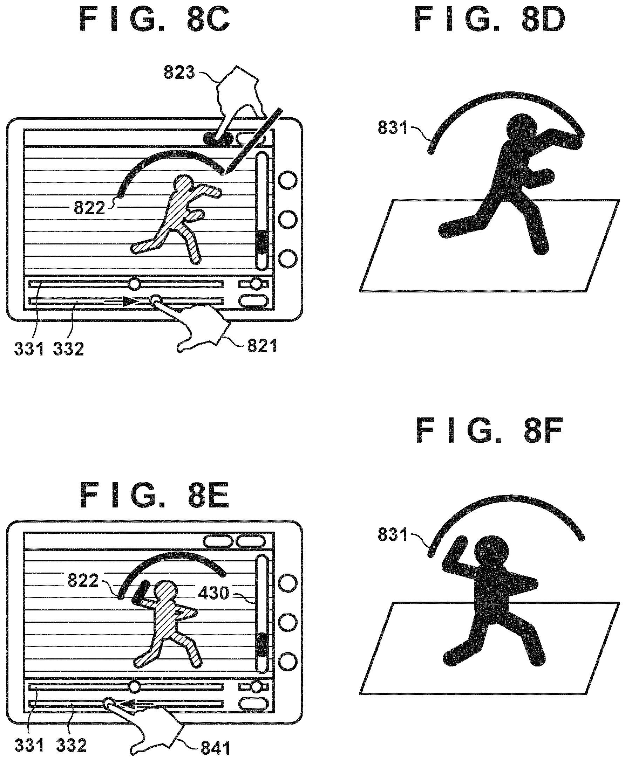

It is assumed that, thereafter, an operation 821 with respect to a main slider 331 or a sub slider 332 of the timecode has been accepted, and a timecode that is different from that in FIG 8A is designated, as shown in FIG 8C. Here, it is assumed that the timecode at this point in time is ww:xx:yy:zz.010. FIG 8C shows a scene in which the photographic subject ends swinging the arm, and a state in which an input of a marker 822 that extends to the vicinity of the swung arm is accepted is shown. When the input of the marker 822 is accepted, a corresponding marker object 831 is generated, and the marker object 831 is located so as to extend to the vicinity of the swung arm of the photographic subject, as shown in FIG 8D. Finally, a user input 823 of again pressing the continuation instruction button 801 is accepted, and the continuation instruction of marker input is canceled.

Accordingly, the marker object 831 shown in FIG 8D is generated in a period of timecode ww:xx:yy:zz.000 to ww:xx:yy:zz.010. After the marker object 831 has been generated, the generated marker object is continuously located over a plurality of frames corresponding to the period of timecode in which the continuation instruction was performed. For example, after the marker object 831 has been generated as shown in FIGS. 8C and 8D, a user operation 841 with respect to the main slider 331 or sub slider 332 of the timecode may be accepted, as shown in FIG 8E. Here, it is assumed that a timecode ww:xx:yy:zz.000 is designated by the user operation 841. This timecode corresponds to the scene in which the photographic subject started swinging an arm, and is a timecode of the time at which the input of the marker 822 has not been completed. However, as a result of this timecode being designated after completing the marker object 831, a display simulating a state in which the input of the marker 822 has been completed is performed, as shown in FIG 8E. Also, as shown in FIG 8F, the generated marker object 831 is located in the same three-dimensional space as the photographic subject at the timecode ww:xx:yy:zz.000. As described above, the marker object 831 continues to be located in the vicinity of the photographic subject in a period of the successive timecodes ww:xx:yy:zz.000 to ww:xx:yy:zz.010. Note that the marker object 831 may not be located in the virtual space in a period other than that period.

As described above, according to the present embodiment, when a marker input is accepted with respect to any of a plurality of frames of a virtual viewpoint image, a marker object that is located over the plurality of frames can be generated, while maintaining the positional relationship between the photographic subject and the marker. Accordingly, the same marker can be displayed at an appropriate position, in a virtual viewpoint image that is rendered in a plurality of frames over a certain period of time. Also, a marker input can be performed in a plurality of frames while referring to the movement of the virtual viewpoint image, and therefore the user can perform a marker input that is more suitable to the movement of the photographic subject.

### [Third Embodiment]

In the present embodiment, processing for editing a marker object generated by the procedure described in the first and second embodiments will be described. In the present embodiment as well, the system configuration and the apparatus configuration are similar to those of the first embodiment, and therefore the description thereof will not be repeated here.

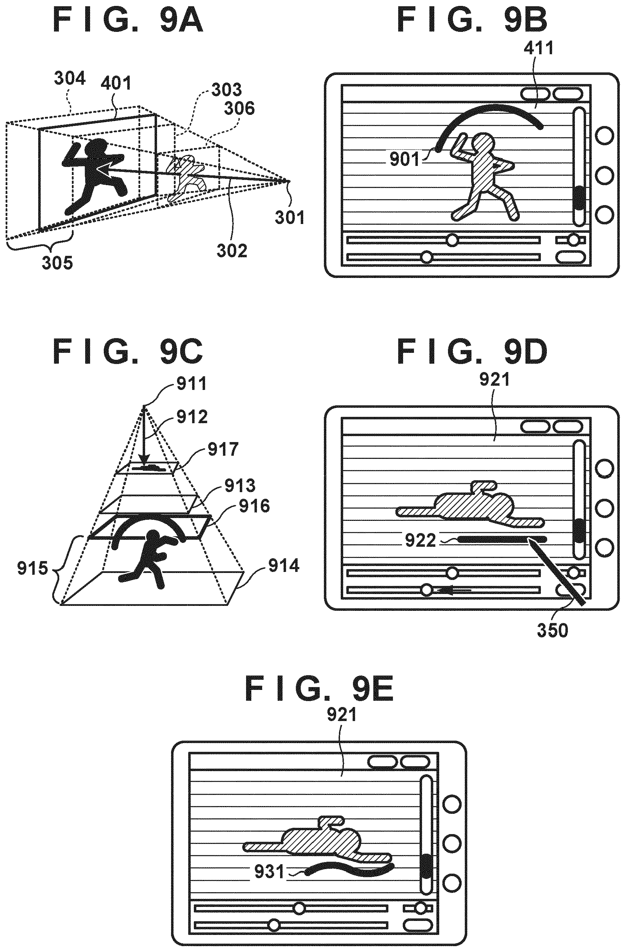

First, FIG 9A shows a state in which a photographic subject is laterally captured with a virtual viewpoint position and a line of sight direction that are the same as those in FIG 4A. FIG 9B shows a state in which an input of a marker 901 has been accepted in the plane 411 corresponding to the plane of interest 401, by the virtual camera in FIG 9A. This marker 901 is to be converted to a marker object as described above.

It is assumed that, thereafter, in order to edit a marker object corresponding to this marker 901, the virtual viewpoint position and the line of sight direction are changed as in FIG 9C. FIG 9C shows a state in which the virtual viewpoint position 911 and the line of sight direction 912 of the virtual viewpoint are set such that the photographic subject is to be captured from the above. In this state as well, a three-dimensional model of the photographic subject and a marker object corresponding to the marker 901 are located inside the range of a view frustum 915 between a near clip plane 913 and a far clip plane 914. Also, the plane of interest 916 is set inside the range of the view frustum 915. The photographic subject and the marker are projected on a projection plane 917, and the projected image is shown as in FIG 9D.

A marker 922 obtained by projecting the marker object is displayed on a screen in FIG 9D. The user can change the shape of the marker 922 by performing dragging with respect to a point on the marker 922 using the pencil 350, for example. The shape of the marker 922 can be edited in a range that is in contact with the plane of interest 916, for example. Accordingly, as illustrated by a marker 931 in FIG 9E, the shape of the marker object viewed from the above can be changed to a wavy shape. Note that this is merely an example, and of course the shape can be edited to any shape. Note that the user can also perform a new marker input by selecting a point at which the marker 922 is not present by the pencil 350 or the like, for example. That is, on the screen of a virtual viewpoint image, an operation performed on a point at which a marker is already present may be accepted as an operation to edit the marker, and an operation performed on a point at which a marker is not present may be accepted as a new marker input operation. Also, a configuration may also be adopted in which a particular operation mode such as a marker deformation mode is defined, and while the mode is enabled, a new marker input is not accepted, and only an edition of a marker that is already present is accepted. Also, while the mode is disabled, an edition of a marker may not be performed even if the marker is tapped.

In the present embodiment, the shape of a marker object generated by a marker input can be edited as described above. Accordingly, a marker object having a more appropriate shape can be generated.

Note that, in the embodiments described above, processing has been described regarding a case where a marker is added to a virtual viewpoint image that is based on multi-viewpoint images captured by a plurality of image capturing devices, but there is no limitation to this. That is, for example, regarding a case where a marker is added to a virtual viewpoint image generated based on a three-dimensional virtual space all components of which are artificially generated on a computer as well, the marker may also be converted to a three-dimensional object in the virtual space. Also, in the embodiments described above, an example has been described in which a marker object that is associated with the timecode corresponding to a virtual viewpoint image to which a marker is added is generated and stored, but the timecode may not be associated with a marker object. For example, when a virtual viewpoint image is a still image, or when used in an application in which a marker is temporarily added in a conference or the like, the marker object may be displayed or erased by a user operation, for example, irrespective of the timecode. Also, at least some of the image processing apparatuses to be used in a conference system or the like need not have a capability of designating the virtual viewpoint, for example. That is, after a marker has been added to a virtual viewpoint image, the virtual viewpoint need only be able to be designated by a specific user such as a person having a roll of proceeding a conference, and image processing apparatuses of the other users may not accept a virtual viewpoint operation. In this case as well, a marker object is rendered according to the virtual viewpoint and plane of interest designated by the specific user, and therefore inconsistency in the relationship between the marker and the photographic subject in the virtual viewpoint image can be prevented.

In the present embodiment, an example has been described in which a marker object is displayed as additional information to be displayed in a virtual viewpoint image. However, the additional information to be displayed in a virtual viewpoint image is not limited to this. For example, a configuration may also be adopted in which at least any of pieces of additional information such as a marker, an icon, an avatar, and an illustration that is designated by a user is displayed in the virtual viewpoint image. Also, a configuration may be adopted in which a plurality of pieces of additional information are prepared in advance, a user selects any of the pieces of additional information, and the selected additional information is located in the virtual viewpoint image. Also, the configuration may also be such that a user can locate an icon or the like at any position by dragging it in a touch panel display. The located additional information such as an icon is converted to three-dimensional data using the virtual viewpoint position and plane of interest using a method similar to those in the embodiments described above. Note that there is no limitation to this method, and the configuration may also be such that additional information of two-dimensional data is associated with additional information of three-dimensional data in advance, and at the timing at which additional information of two-dimensional data is located, this information is replaced with the associated additional information of three-dimensional data. In this case, the three-dimensional data may be prepared in advance for each distance such that the data content changes according to the distance between the virtual viewpoint position and the plane of interest. In this case, according to the setting of the virtual viewpoint position and plane of interest at the timing at which additional information of two-dimensional data is located, the associated three-dimensional data may be selected and located in the three-dimensional space. Also, by deforming this three-dimensional data as in the third embodiment described above, the three-dimensional data having a more appropriate position or shape can be used as the additional information. As described above, the present embodiment can be applied to cases where various pieces of additional information are displayed in a virtual viewpoint image.

Also, in the embodiments described above, a description has been given in which additional information (marker) is converted to three-dimensional data (marker object), but the three-dimensional data here need not be data representing a three-dimensional shape. That is, the three-dimensional data is data at least including a three-dimensional position in a virtual space, and the shape of the additional information may also be a plane, a line, or a point.

Also, in the embodiments described above, an example in which the plane of interest is a plane in a range of the view frustum has been described, but there is no limitation to this. For example, the plane of interest may also be a curved plane. As an example in which the plane of interest is a curved plane, a hemispherical (or spherical) plane whose center is a virtual viewpoint and whose radius is a certain distance from the virtual viewpoint may also be used as the plane of interest. In this case, the setting of the plane of interest may be performed only by designating the distance from the virtual viewpoint. Also, a curved plane obtained by cutting such a hemispherical plane by a view frustum may also be used as the plane of interest. Also, a hemispherical (or spherical) plane whose center is a position of a photographic subject in a three-dimensional space and whose radius is a certain distance from the position may also be used as the plane of interest. In this case, the setting of the plane of interest may be performed only by designating the distance from the photographic subject. Moreover, when a plurality of photographic subjects are present, a photographic subject may be designated for setting the plane of interest, or the plane of interest may also be set for each of the plurality of photographic subjects. Also, the plane of interest that is set with reference to the photographic subject may be a plane instead of a curved plane. Also, the plane of interest may also be, instead of a plane having a limited size in the range of the view frustum described above, a plane having an indefinite size including the plane (e.g., a plane extending over entire range in the virtual space). Here, the distance from the virtual viewpoint to the plane of interest may be set in a range in which the plane crosses the view frustum. Note that the case where this plane is cut out in a range in which the plane crosses the view frustum corresponds to the case described using FIG 4A, for example. Note that such a restriction is for preventing objects that are present at a position closer to the virtual viewpoint relative to the near clip plane and at a position separating from the virtual viewpoint relative to the far clip plane from being not rendered in the virtual viewpoint image. Note that this is merely an example, and the plane of interest may be set at a position closer to the virtual viewpoint relative to the near clip plane and at a position separating from the virtual viewpoint relative to the far clip plane. In this case, additional information is not rendered along with the photographic subject in the virtual viewpoint image, but by changing the virtual viewpoint position or focal distance, for example, a virtual viewpoint image indicating the additional information can be generated. Accordingly, additional information such as a position at which the photographic subject is present or a description of the photographic subject can be located in the virtual space, for example.

Also, all of the functions described in the embodiments described above may not be included, and implementation can be performed by combining any functions.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An image processing apparatus obtains an input of additional information to a two-dimensional virtual viewpoint image that is based on a three-dimensional virtual space and a virtual viewpoint in the virtual space, sets a plane of interest on which the additional information is to be located in the virtual space, in a range according to the virtual viewpoint in the virtual space, converts the additional information to an object to be located at a three-dimensional position in the virtual space by projecting the input additional information to the plane of interest, and causes a display to display the virtual viewpoint image that is based on the virtual space in which the object is located at the three-dimensional position.

## Claims

1. An image processing apparatus (104) comprising:
obtaining means (214) for obtaining an input of additional information to a two-dimensional virtual viewpoint image that is based on a three-dimensional virtual space and a virtual viewpoint in the virtual space;
setting means (205) for setting a plane of interest on which the additional information is to be located in the virtual space, in a range according to the virtual viewpoint in the virtual space;
converting means (204) for converting the additional information to an object to be located at a three-dimensional position in the virtual space by projecting the input additional information to the plane of interest; and
display control means (215) for causing display means to display the virtual viewpoint image that is based on the virtual space in which the object is located at the three-dimensional position.

2. The image processing apparatus according to claim 1,
wherein the plane of interest is a plane that perpendicularly crosses a vector indicating a line of sight direction from the virtual viewpoint position; and
the setting means sets the plane of interest by accepting a user setting of a distance from the virtual viewpoint to a point at which the plane and the vector cross.

3. The image processing apparatus according to claim 1,
wherein the plane of interest is a plane that is included in a range of a view frustum in the virtual viewpoint, out of planes that perpendicularly cross a vector indicating a line of sight direction from the virtual viewpoint position, and
the setting means sets the plane of interest by accepting a user setting of a distance from the virtual viewpoint to a point at which the plane and the vector cross, in a range in which the plane crosses the view frustum.

4. The image processing apparatus according to claim 3, wherein the setting means further accepts a change in size of the plane of interest.

5. The image processing apparatus according to claim 3 or 4, wherein the plane of interest has an initial size corresponding to a size of the view frustum.

6. The image processing apparatus according to claim 1,
wherein the plane of interest is a plane having a shape of hemisphere centered about the virtual viewpoint position, and
the setting means sets the plane of interest by accepting a user setting of a distance from the virtual viewpoint to a point at which the plane and a vector indicating a line of sight direction from the virtual viewpoint position cross.

7. The image processing apparatus according to any one of claims 1 to 6, wherein the setting means, upon accepting an operation to add the plane of interest, sets a plurality of planes of interest.

8. The image processing apparatus according to claim 7, wherein the converting means converts, in a case where the plurality of planes of interest are set, the additional information to the object using the plane of interest corresponding to a position at which the additional information has been input in the virtual viewpoint image.

9. The image processing apparatus according to claim 7 or 8, wherein the converting means converts, in a case where a plurality of the planes of interest corresponding to a position at which the additional information is input in the virtual viewpoint image are present, converts the additional information to the object using the plane of interest whose distance from the virtual viewpoint position is shortest.

10. The image processing apparatus according to claim 7 or 8, wherein the converting means, in a case where a plurality of the planes of interest corresponding to a position at which the additional information is input in the virtual viewpoint image are present, accepts a user selection regarding which of the plurality of planes of interest is to be used to convert the additional information to the object.

11. The image processing apparatus according to any one of claims 1 to 10,
wherein a timecode corresponding to the virtual viewpoint image at a time when the additional information was input is associated with the object, and
the display control means, in a case where the virtual viewpoint image corresponding to a timecode with which the object is associated is to be displayed, displays the virtual viewpoint image, based on the virtual space in which the object is located.

12. The image processing apparatus according to any one of claims 1 to 11,
wherein the obtaining means has a function of accepting an input of the additional information for a plurality of successive frames in the virtual viewpoint image, and
the converting means converts the additional information, in each of the plurality of frames in which the function is set to be enabled, to an object to be placed at a three-dimensional position in the virtual space in a period corresponding to the plurality of frames.

13. The image processing apparatus according to any one of claims 1 to 12, further comprising means for accepting an edition of the additional information included in the virtual viewpoint image displayed in the display means.

14. An image processing method to be executed by an image processing apparatus, comprising:
obtaining (S709) an input of additional information to a two-dimensional virtual viewpoint image that is based on a three-dimensional virtual space and a virtual viewpoint in the virtual space;
setting (S752, S753, S754) a plane of interest on which the additional information is to be located in the virtual space, in a range according to the virtual viewpoint in the virtual space;
converting (S710) the additional information to an object to be located at a three-dimensional position in the virtual space by projecting the input additional information to the plane of interest; and
causing (S712) display means to display the virtual viewpoint image that is based on the virtual space in which the object is located at the three-dimensional position.

15. A program for causing a computer to function as the image processing apparatus according to any one of claims 1 to 13.
